# EUROPÄISCHE PATENTSCHRIFT

(11) **EP 1 857 267 B1**
(45) Veröffentlichungstag und Bekanntmachung des Hinweises auf die Patenterteilung: **16.12.2009**
(21) Anmeldenummer: 07009795.1
(22) Anmeldetag: 16.05.2007
(51) Int. Cl.: B32B 25/20, B32B 25/10, B29C 45/16

(54) **Zwei-Komponenten-Kunststoffbauteil für den Sanitärbereich und Verfahren zum Herstellen dieses Zwei-Komponenten-Kunststoffbauteils**
Bi-component plastic part for sanitary facilities and process to obtain this part
Pièce plastique bi-composant pour le domaine sanitaire et procédé de fabrication de cette pièce

(30) Priorität: 19.05.2006 DE 102006023847
(43) Veröffentlichungstag der Anmeldung: 21.11.2007
(73) Patentinhaber: K+S GmbH Modell-und Formenbau, 68753 Waghäusel (DE)
(72) Erfinder: Sauer, Joachim, 69168 Wiesloch (DE); Kuhn, Rudolf, 68753 Waghäusel (DE)
(74) Vertreter: Durm & Partner

(56) Entgegenhaltungen:
- EP-A- 0 284 714
- EP-A- 0 803 350
- EP-A2- 0 824 062
- WO-A-95/19883
- CH-A- 409 764
- US-A1- 2004 067 705

## Beschreibung

### TECHNISCHES GEBIET

Die vorliegende Erfindung betrifft ein Bauteil für den Sanitärbereich, nämlich Badewanne, Duschwanne, Waschbecken, Teilbereiche vorgenannter Bauteile, Bodenfliese, Wandverkleidungselement, Beckenrandteil für Schwimmbäder oder Treppeneinstiegsbauteil für Schwimmbäder, das als Zwei-Komponenten-Kunststoffbauteil mit folgendem schichtweisen Aufbau ausgebildet ist: Einer ersten Kunststoffschicht als Nutz-/Gebrauchsoberfläche oder -schicht, einer zweiten Kunststoffschicht als Tragschicht und einer zwischen erster Kunststoffschicht und zweiter Kunststofftragschicht angeordneten Gewebeschicht, in die von einer Seite her die erste Kunststoffschicht und von der anderen Seite her die zweite Kunststoffschicht eingedrungen ist, so dass jeweils eine mechanische Verbindung zwischen der ersten Kunststoffschicht mit der Gewebeschicht und der zweiten Kunststoffschicht mit Gewebeschicht besteht.

### STAND DER TECHNIK

Es ist ein Verfahren zum Herstellen von Zwei-Komponenten-Kunststoffbauteilen bekannt. Dabei wird zunächst eine erste Kunststoffkomponente und daran anschließend eine zweite Kunststoffkomponente in ein Werkzeugformteil eines Kunststoffspritzwerkzeuges eingespritzt.

In der DE 697 07 380 T2 ist ein mehrschichtiger Gegenstand mit einer wirksam verbundenen Oberflächenschicht und ein Verfahren zu seiner Herstellung offenbart. Der mehrschichtige Gegenstand besteht aus einem Kunststoffbauteil, einem Zwischensubstrat und einem Oberflächenauftragsmaterial, wobei sowohl das Kunststoffteil teilweise in das Zwischensubstrat eindringt als auch das Oberflächenauftragsmaterial.

In der schweizer Patentschrift 409 764 ist ein Fass offenbart, dessen Wandung aus zwei Niederdruckharzschichten gebildet wird, wobei zwischen den beiden Schichten eine glasfaserbewehrte Laminatschicht angeordnet ist. Die innere Schicht kann hierbei aus Silikonharz bestehen.

In dem US-Patent 2 703 775 ist ein Gegenstand beschrieben, bei dem beispielsweise auf einer Metalloberfläche Silikon befestigt ist. Dabei wird ein Glasfaservlies mit der Silikonschicht verbunden, wobei wiederum dieses Glasfaservlies mittels "Zement" mit der Metalloberfläche verbunden wird.

Die europäische Patentanmeldung 0 803 350 offenbart ein Mehrstoffverbundmaterial und ein Verfahren zur Herstellung desselben. Dabei geht es vornehmlich um Fussbodenbeläge. Das Material selbst wird gebildet durch eine flächenförmige Polymerregion, einer Durchdringungsregion und aus einer faserhaltigen Basisregion, wobei in der Durchdringungsregion Materialeinlagerungen aus dem Polymer der Polymerregion zwischen den Fasern aus der Basisregion bis zu einer definierten Tiefe der faserhaltigen Basisregion vorhanden sind. Dadurch wird eine formschlüssige Verbindung zwischen Polymer und Fasern der flächenförmigen Basisregion erzielt.

Die europäische Patentanmeldung 0 284 714 offenbart eine Verbundbahn aus zwei Kunststofffolien, die aufgrund ihrer chemischen Zusammensetzung nur mittelbar miteinander dauerhaft verbindbar sind. Als "Haftvermittler" wird ein Vlies zwischen die miteinander zu verbindenden Folien eingebracht, dessen Fasern teilweise im Material der einen und teilweise im Material der anderen Folie eingebettet sind.

Bei dem Gegenstand der WO 95 / 19883 wird ebenfalls eine faserige Zwischenschicht eingesetzt, um Kunststoffkomponenten miteinander zu verbinden, wobei beide Komponenten in das Fasermaterial eindringen.

In der US 2004/0067705 ist ein Zwei-Komponenten-Bauteil beschrieben, bei dem als Verbindungsschicht eine poröse Schicht verwendet wird, die unterschiedliche Kunststoffschichten miteinander verbindet.

### DARSTELLUNG DER ERFINDUNG

Ausgehend vom genannten Stand der Technik liegt der vorliegenden Erfindung das technische Problem beziehungsweise die Aufgabe zugrunde, ein Bauteil für den Sanitärbereich als Zwei-Komponenten-Kunststoffbauteil herzustellen, das als Gebrauchsgegenstand eine Nutz-/Komfortschicht mit guten Festigkeits- und Qualitätseigenschaften aufweist und das einfach und wirtschaftlich herstellbar ist.

Das erfindungsgemäße Bauteil für den Sanitärbereich als Zwei-Komponenten-Kunststoffbauteil ist durch die Merkmale des unabhängigen Anspruchs 1 gegeben.

Vorteilhafte Ausgestaltungen und Weiterbildungen sind Gegenstand der vom unabhängigen Anspruch 1 direkt oder indirekt abhängigen Ansprüche 2 bis 6.

Das erfindungsgemäße Bauteil für den Sanitärbereich als Zwei-Komponenten-Kunststoffbauteil der eingangs genannten Art ist demgemäß dadurch gekennzeichnet, dass die erste Kunststoffschicht aus weichem Silikon besteht.

Bei dem erfindungsgemäßen Sanitärbauteil ist erkannt worden, dass die erste Kunststoffschicht, nämlich Silikonschicht, die normalerweise keinerlei Verbindung mit weiteren Kunststoffen eingeht, über eine Gewebeschicht mechanisch bereichsweise gebunden wird und gleichzeitig eine mechanische Verbindung einer zweiten Kunststoffschicht mit dieser Gewebeschicht erfolgt, so dass insgesamt ein Sanitärbauteil entsteht, das eine Silikonoberfläche aufweist und gleichzeitig sehr gute Festigkeits- und sonstige Qualitätseigenschaften besitzt.

Der zweite Kunststoff (Tragschicht) beziehungsweise die zweite Kunststoffschicht besteht bevorzugt aus Kunstharz, insbesondere Polyester-, Epoxid- oder PU-(Polyurethan) Harz oder aus glasfaserverstärktem Kunststoff.

Als Gewebe wird bevorzugt ein Gewebe aus Glas-, Carbon-, Kunststoff- oder Naturfaser eingesetzt.

Eine bevorzugte Ausgestaltung zeichnet sich dadurch aus, dass der erste Kunststoff beziehungsweise die weiche Silikonschicht eine Schichtdicke von ca. 3 mm (Millimeter) bis ca. 15 mm (Millimeter) aufweist.

Die zweite Kunststoffschicht, die als eigentliche Tragschicht dient, weist bevorzugt eine Schichtdicke im Bereich von ca. 2 mm (Millimeter) bis ca. 10 mm (Millimeter) auf.

Als mögliche Anwendungsbeispiele für die erfindungsgemäßen Bauteile mit einer weichen Silikonoberfläche kommen folgende Bereiche in Betracht:
- Badewannen
- Duschwannen
- Waschbecken
- Beckenränder für Schwimmbecken
- Treppeneinstiege in Schwimmbädern
- Teilbereiche (Kissen oder Armablagen beispielsweise bei Badewannen)
- Bodenfliesen
- Wandverkleidungen ("Gummizellen")

Der Einsatz der erfindungsgemäßen Sanitärbauteile mit Silikonoberfläche bringt viele Vorteile mit sich. So ist ein Antirutsch-Effekt gegeben, das heißt es erfolgt kein Ausrutschen auf nassen Silikonoberflächen. Aufgrund der weichen Silikonoberfläche besteht eine sehr geringe Verletzungsgefahr. Darüber hinaus kann eine Silikonoberfläche leicht gereinigt werden. Die UV-Beständigkeit der Silikonoberfläche erweitert das Einsatzgebiet enorm. Darüber hinaus ist eine derartige Silikonoberfläche lebensmittelecht, so dass beispielsweise ein Einsatz im Küchenbereich problemlos möglich ist.

### KURZE BESCHREIBUNG DER ZEICHNUNG

Die Erfindung sowie vorteilhafte Ausführungsformen und Weiterbildungen derselben werden im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:

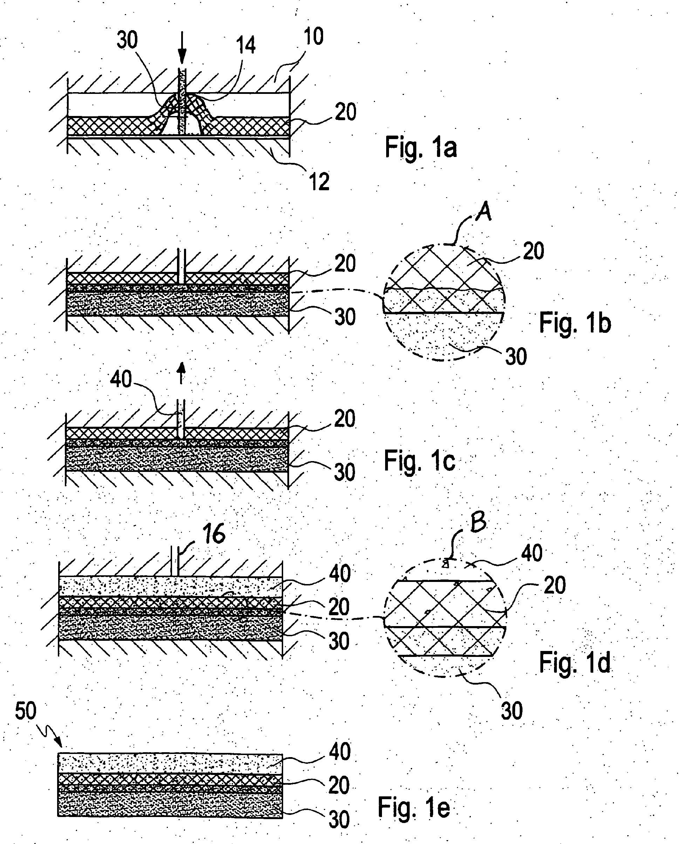

Fig. 1a bis e schematische Darstellung der einzelnen Verfahrensschritte beim Herstellen eines Sanitärbauteils als Zwei-Komponenten-Kunststoffbauteils mit Silikonoberfläche nach dem Injektionsverfahren.

### WEGE ZUM AUSFÜHREN DER ERFINDUNG

In Fig. 1a bis e ist schrittweise die Herstellung eines Zwei-Komponenten-Kunststoffbauteils 50 (siehe Fig. 1e) mittels des Injektionsverfahrens dargestellt. Hierzu wird ein Werkzeug verwendet, das ein Werkzeugoberteil 10 und ein Werkzeugunterteil 12 aufweist, wobei beide Teile die Bauteilform bestimmen. Im dargestellen Ausführungsbeispiel bildet die Oberfläche des unteren Werkzeugteils 12 die Bauteilsichtseite und die untere Oberfläche des Werkzeugoberteils 10 die Bauteilrückseite. Zunächst wird eine Gewebeschicht 20 in das Werkzeug, das heißt auf die Oberfläche des Werkzeugunterteils 12 eingelegt. Daran anschließend wird von der Rückseite des Werkzeuges, das heißt durch das Werkzeugoberteil 10 hindurch ein Kunststoffrohr (Anspritzkanal 14) durch die Gewebeschicht 20 bis nahe an die Bauteiloberfläche beziehungsweise die Oberfläche des Werkzeugunterteils 12 gesteckt. Dabei kann die Gewebeschicht 20 im Bereich des Anspritzkanals 14 angehoben vorhanden sein (wie in Fig. 1a dargestellt), damit sichergestellt ist, dass das durch den Anspritzkanal 14 anschließend eingebrachte Silikon 30 auf die Oberfläche des Werkzeugunterteils 12 trifft und die Gewebeschicht 20 von unten her teilweise durchdringen kann.

Durch diesen Anspritzkanal 14 wird dann Silikon 30 an die Bauteiloberfläche gespritzt (siehe Fig. 1b). Das einfließende Silikon 30 presst die Gewebeschicht 20 an die spätere Bauteilrückseite (untere Oberfläche des oberen Werkzeugteils 10) und dringt durch den Gießdruck in die Gewebeschicht 20 teilweise ein, um sich mechanisch mit diesem zu verbinden. Da das Silikon 30 unter das Gewebe 20 gespritzt wird, befindet sich an der Bauteiloberfläche (Oberfläche des unteren Werkzeugteils 12) kein Gewebematerial sondern nur Silikon 30. Die Viskosität und Menge des Silikons 30 und die Dichte der Gewebeschicht 20 sind so aufeinander abgestimmt, dass das Silikon 30 das Gewebe 20 nicht durchtränkt, sondern nur bereichsweise von unten her eindringt. Gleichzeitig wird eine glatte Bauteilsichtseite erzeugt.

Anschließend oder nach dem Aushärten des Silikons 30 wird der Anspritzkanal 14 entfernt (Fig. 1c). Anschließend wird durch eine Öffnung 16, in der der Anspritzkanal 14 geführt war, ein zweiter Kunststoff, insbesondere Kunstharz 40 in die Form injiziert und das restliche Gewebe 20 von oben her durchtränkt, wodurch das Bauteil 50 seine Festigkeit erhält (Fig. 1d). Nach dem Aushärten der zweiten Kunststoffschicht (40) kann das fertige Bauteil 50 entnommen werden (Fig. le).

Das Eindringen des Silikons 30 in das Gewebe 20 beziehungsweise des Kunstharzes 40 in das Gewebe 20 ist in Fig. 1 im Detail A beziehungsweise B schematisch vergrößert dargestellt.

Mit diesem beispielshaft dargestellten Verfahren ist es möglich, Sanitärbauteile als Zwei-Komponenten-Kunststoffbauteile 50 herzustellen, die eine Silikonschicht und eine zweite Kunststoffschicht, zum Beispiel aus glasfaserverstärkter Kunststoff, aufweisen, die eine dauerhaft zuverlässige Verbindung und damit auch Funktion gewährleisten.

Aufgrund der vorteilhaften oben beschrieben beziehungsweise bekannten Materialeigenschaften von Silikon steht somit ein neues erfindungsgemäßes Bauteil im Sanitärbereich zur Verfügung, das vielfältige Einsatzmöglichkeiten aufweist.

## Patentansprüche

1. Bauteil für den Sanitärbereich, nämlich Badewanne, Duschwanne, Waschbecken, Teilbereiche vorgenannter Bauteile, Bodenfliese, Wandverkleidungselement, Beckenrandteil für Schwimmbäder oder Treppeneinstiegsbauteil für Schwimmbäder, das als Zwei-Komponenten-Kunststoffbauteil (50) mit folgendem schichtweisen Aufbau ausgebildet ist:
- einer ersten Kunststoffschicht als Nutz-/Gebrauchsoberfläche oder -schicht,
- einer zweiten Kunststoffschicht (40) als Tragschicht und
- einer zwischen erster Kunststoffschicht (30) und zweiter Kunststofftragschicht (40) angeordneten Gewebeschicht (20), in die von einer Seite her die erste Kunststoffschicht (30) und von der anderen Seite her die zweite Kunststoffschicht (40) eingedrungen ist, so dass jeweils eine mechanische Verbindung zwischen der ersten Kunststoffschicht (30) mit der Gewebeschicht (20) und der zweiten Kunststoffschicht (40) mit Gewebeschicht (20) besteht,
- **dadurch gekennzeichnet, dass**
- die erste Kunststoffschicht (30) aus weichem Silikon besteht.

2. Zwei-Komponenten-Kunststoffbauteil nach Anspruch 1,
**- dadurch gekennzeichnet, dass**
- die zweite Kunststoffschicht (40) aus Kunstharz, insbesondere Polyester-, Epoxid- oder PU-Harz, besteht.

3. Zwei-Komponenten-Kunststoffbauteil nach Anspruch 1 oder 2,
**- dadurch gekennzeichnet, dass**
- die zweite Kunststoffschicht (40) aus glasfaserverstärktem Kunststoff besteht.

4. Zwei-Komponenten-Kunststoffbauteil nach Anspruch 1, 2 oder 3,
**- dadurch gekennzeichnet, dass**
- das Gewebe (20) als Gewebe aus Glas-, Carbon-, Kunststoff- oder Naturfasern oder dergleichen ausgebildet ist.

5. Zwei-Komponenten-Kunststoffbauteil nach einem oder mehreren der vorstehenden Ansprüche,
- **dadurch gekennzeichnet, dass**
- die weiche Silikonschicht (30) eine Schichtdicke von ca. 3 mm (Millimeter) bis ca. 15 mm (Millimeter) aufweist.

6. Zwei-Komponenten-Kunststoffbauteil nach einem oder mehreren der vorstehenden Ansprüche,
- **dadurch gekennzeichnet, dass**
- die zweite Kunststoffschicht (40) eine Schichtdicke im Bereich von ca. 2 mm (Millimeter) bis ca. 10 mm (Millimeter) aufweist.

## Claims

1. A part for sanitary facilities, namely bathtubs, shower stalls, wash basins, subareas of the above-mentioned parts, floor tiles, wall paneling elements, basin edge parts for swimming pools or staircase entry parts for swimming pools, which is implemented as a two-component plastic part (50) having the following layered construction:
- a first plastic layer as a utility/usage surface or layer,
- a second plastic layer (40) as a support layer, and
- a fabric layer (20), which is situated between the first plastic layer (30) and the second plastic support layer (40), into which the first plastic layer (30) has penetrated from one side and the second plastic layer (40) has penetrated from the other side, so that in each case there is a mechanical connection between the first plastic layer (30) and the fabric layer (20) and the second plastic layer (40) and the fabric layer (20),
- **characterized in that**
- the first plastic layer (30) comprises soft silicone.

2. The two-component plastic part according to Claim 1,
**- characterized in that**
- the second plastic layer (40) comprises artificial resin, in particular polyester, epoxide, or polyurethane resin.

3. The two-component plastic part according to Claim 1 or 2,
- **characterized in that**
- the second plastic layer (40) comprises glass-fiber-reinforced plastic.

4. The two-component plastic part according to Claim 1, 2, or 3,
- **characterized in that**
- the fabric (20) is implemented as a fabric made of glass, carbon, plastic, or natural fibers or the like.

5. The two-component plastic part according to one or more of the preceding claims,
- **characterized in that**
- the soft silicone layer (30) has a layer thickness of approximately 3 mm (millimeters) to approximately 15 mm (millimeters).

6. The two-component plastic part according to one or more of the preceding claims,
- **characterized in that**
- the second plastic layer (40) has a layer thickness in the range from approximately 2 mm (millimeters) to approximately 10 mm (millimeters).

## Revendications

1. Pièce destinée aux équipements sanitaires, à savoir aux baignoires, aux bacs à douche, aux lavabos, aux parties constitutives desdits équipements, aux carrelages, aux éléments de revêtement mural, aux éléments de bord de piscine ou aux éléments d'escalier d'accès pour piscines, ladite pièce se présentant sous forme d'une pièce en matière plastique à deux composants (50) qui est constituée des couches suivantes :
- une première couche en matière plastique destinée à former une face ou couche d'utilisation,
- une deuxième couche en matière plastique (40) destinée à former une couche de support, et
- une couche de tissu (20) disposée entre la première couche en matière plastique (30) et la deuxième couche de support en matière plastique (40), ladite couche de tissu étant pénétrée, sur l'une de ses faces, par la première couche en matière plastique (30) et, sur l'autre face, par la deuxième couche en matière plastique (40), de façon à ce qu'une liaison mécanique soit établie entre la première couche en matière plastique (30) et la couche de tissu (20) et, respectivement, entre la deuxième couche en matière plastique (40) et la couche de tissu (20,
- **caractérisée en ce que**
- la première couche en matière plastique (30) est constituée de silicone souple.

2. Pièce en matière plastique à deux composants selon la revendication 1,
- **caractérisée en ce que**
- la deuxième couche en matière plastique (40) est constituée d'une résine de synthèse, notamment d'une résine de polyester, d'époxyde ou de PU.

3. Pièce en matière plastique à deux composants selon les revendications 1 ou 2,
- **caractérisée en ce que**
- la deuxième couche en matière plastique (40) est constituée d'une matière plastique renforcée de fibres de verre

4. Pièce en matière plastique à deux composants selon les revendications 1, 2 ou 3,
- **caractérisée en ce que**
- le tissu (20) se présente sous forme d'un tissu réalisé à partir de fibres de verre, de carbone, de matière plastique ou à partir de fibres naturelles.

5. Pièce en matière plastique à deux composants selon l'une ou plusieurs des revendications précédentes,
- **caractérisée en ce que**
- la couche en silicone souple (30) présente une épaisseur de couche comprise entre environ 3 mm (millimètres) et environ 15 mm (millimètres).

6. Pièce en matière plastique à deux composants selon l'une ou plusieurs des revendications précédentes,
- **caractérisée en ce que**
- la deuxième couche en matière plastique (40) présente une épaisseur de couche de l'ordre d'environ 2 mm (millimètres) à environ 10 mm (millimètres).
